# EUROPEAN PATENT APPLICATION

(11) **EP 4 644 753 A1**
(43) Date of publication of application: **05.11.2025**
(21) Application number: 24173228.8
(22) Date of filing: 30.04.2024
(51) Int. Cl.: F16L 9/18, F16L 23/02, F16L 27/11, F16L 43/02, F16L 51/02, F16L 51/03, F16L 55/07, F16L 59/14, F16L 59/21, F16L 59/22, F16L 43/00

(54) **CURVED PIPE SEGMENT FOR TRANSPORTING A CRYOGENIC FLUID, ASSOCIATED ARRANGEMENT AND AIRCRAFT**

(71) Applicant: Airbus Operations GmbH, 21129 Hamburg (DE)
(72) Inventor: Wiegand, Steffen, 21129 Hamburg (DE)

(57) **Abstract**

This curved pipe segment (16) for transporting a cryogenic fluid is elongated along a curved axial direction (A) and comprises:
- an outer curved tube (24), comprising a first outer end (48) and a second outer end (50);
- an inner curved tube (26) comprising a first inner end (52) and a second inner end (54);
- a first end portion (28), connected to the first outer end (48); and
- a second end portion (30), connected to the second outer end (50).

The curved pipe (16) segment comprises:
- a first connection element (32) guiding the first inner end (52) along the axial direction (A);
- a second connection element (34) guiding the second inner end (54) along the axial direction (A); and
- an intermediate guiding element (36) blocking axial movement of the inner curved tube (26) relative to the outer curved tube (24).

## Description

The present disclosure relates to a curved pipe segment for transporting a cryogenic fluid. The present disclosure further relates to an arrangement for transporting a cryogenic fluid, comprising such a curved pipe segment. The present disclosure also relates to an aircraft, comprising a cryogenic tank and further comprising a curved pipe segment as above mentioned and/or an arrangement for transporting a cryogenic fluid as above mentioned.

In the domain of pipe segments for transporting cryogenic fluids, it is known to use double walled pipe segments. Those double walled pipe segments define an interspace which is particularly relevant to contain potential leaks from the fluid contained in the double walled pipe segment. These double walled pipe segments also limit heat transfer between an outside and an inside of the pipe segment. For example, such pipe segments comprise an inner tube, configured to transport the cryogenic fluid, and an outer tube, arranged around the inner tube.

Due to the high temperature difference between the inside and the outside of such pipe segments when the pipe segment transports fluid, the inner and the outer tubes of the pipe segment are exposed to significantly different temperatures. Therefore, the thermal expansion of the inner and outer tube is different when the pipe segment is in use, which leads to a relative displacement between the inner tube and the outer tube, depending on the use of the pipe segment.

In order to limit strain in the pipe segment, it is critical to ensure that movement between the inner tube and the outer tube is possible. However, in order to ensure that the pipe segment is leak tight, it is critical that this movement remains controlled.

In order to deal with such problems for curved pipe segments, a solution has up to now been relying on compensation elements arranged on linear pipe segments arranged adjacent to the curved pipe segments. In particular known curved pipe segments comprise independent inner tubes and outer tubes which are both connected to an inner tube and an outer tube of an adjacent linear pipe segment. Such adjacent linear pipe segment then provides junction between the inner and the outer tubes and caters for different thermal expansion of the inner and outer tubes.

Such a solution is however not entirely satisfying. Indeed, such an arrangement requires both the inner and the outer tubes of the curved pipe segment to be fastened, generally welded, to an adjacent linear pipe segment, which renders the curved pipe segments difficult to install. Furthermore, such an arrangement does not allow for an accurate control of the distance between the inner and outer tubes, which can compromise the tightness of the curved pipe segment

An aim of the invention is therefore to provide a curved pipe segment in which internal strains resulting from the conduction of a cryogenic fluid are limited, whose structural integrity in use is ensured, but which is also limiting leakage risks and which is easy to assemble.

To this end, the invention relates to a curved pipe segment for transporting a cryogenic fluid, the curved pipe segment being elongated along a curved axial direction and comprising:
- an outer curved tube, comprising:
   + a first outer end, and
   + a second outer end, opposite the first outer end;
- an inner curved tube, arranged within the outer curved tube and comprising:
   + a first inner end, and
   + a second inner end, opposite the first inner end;
- a first end portion, connected to the first outer end; and
- a second end portion, connected to the second outer end;
wherein the curved pipe segment further comprises:
- a first connection element, connecting the inner curved tube to the first end portion and guiding the first inner end along the axial direction;
- a second connection element, connecting the inner curved tube to the second end portion and guiding the second inner end along the axial direction; and
- an intermediate guiding element, axially arranged between the first and second connection elements and blocking axial movement of the inner curved tube relative to the outer curved tube.

The use of a curved pipe segment comprising such first connection element, second connection element and intermediate guiding element is particularly advantageous since it allows for a controlled displacement of the inner tube relative to the outer tube while allowing for the first and second end portion to be directly and easily connectable with an adjacent tube.

According to other advantageous aspects of the invention, the curved pipe segment comprises one or more of the following features taken alone or according to all technically possible combinations:
- the intermediate guiding element radially guides the inner curved tube relative to the outer curved tube;
- the intermediate guiding element is radially arranged between the inner curved tube and the outer curved tube;
- the first and/or second connection element comprises a bellow;
- the curved pipe segment is curved such that an angle between a first end and a second end of the curved pipe segment is comprised between 10° and 170°;
- the first and/or second end portion comprises a flange, the flange being configured for connecting the curved pipe segment with an adjacent pipe segment;
- the intermediate guiding element comprises one inner portion, fastened to the inner tube and one outer portion, fastened to the outer tube, the inner portion and the outer portion being configured to cooperate for blocking axial movement of the inner curved tube relative to the outer curved tube;
- a radial distance between the inner portion and the outer curved tube and/or a radial distance between the outer portion and the inner curved tube is superior to 0.1 mm;
- one of the inner and outer portion comprises two external lugs and the other of the inner and outer portion comprises one internal lug, the internal lug being axially arranged between the two external lugs;
- one of the inner and outer portion comprises a radially extending slot, the other of the inner and outer portion comprising a pin cooperating with the radially extending slot;
- the intermediate guiding portion comprises at least three inner portions and at least three outer portions, each inner portion being configured to cooperate with one of the outer portions for blocking axial movement of the inner curved tube relative to the outer curved tube;
- the intermediate guiding element comprises a spring, the spring being fastened to the inner curved tube and to the outer curved tube; and
- the spring has a rhombus-shaped orthoradial profile, the spring being fastened to the outer curved tube along an outer vertex of the rhombus-shaped orthoradial profile and being fastened to the inner curved tube along an inner vertex of the rhombus-shaped orthoradial profile.

The invention also relates to an arrangement for transporting a cryogenic fluid, comprising a curved pipe segment as above mentioned and at least one adjacent pipe segment, the at least one adjacent pipe segment being removably fastened to the curved pipe segment.

The invention further relates to an aircraft comprising a cryogenic tank, the aircraft further comprising:
- a curved pipe segment as above mentioned, fluidically connected with the cryogenic tank, and/or
- an arrangement for transporting a cryogenic fluid as above mentioned, fluidically connected with the cryogenic tank.

The invention will be better understood when reading the following description, which is given solely by way of example and with reference to the appended drawings, in which:
- Figure 1 is a schematic view of an aircraft comprising an arrangement for transporting a cryogenic fluid, which comprises a curved pipe segment;
- Figure 2 is a schematic view of the arrangement for transporting a cryogenic fluid of figure 1;
- Figure 3 is a schematic view, truncated along a plane comprising the curved axial direction, of the arrangement for transporting a cryogenic fluid of figure 2;
- Figure 4 is a detailed schematic view of the inside of the curved pipe presented on figure 3, taken along a P-P section plane; and
- Figure 5 is a schematic view similar to the view of figure 3, of another example of a curved pipe segment.

In this description, the term cryogenic preferably refers to a temperature below 120 K. As a consequence, the term cryogenic fluid refers to a fluid which temperature is below 120 K.

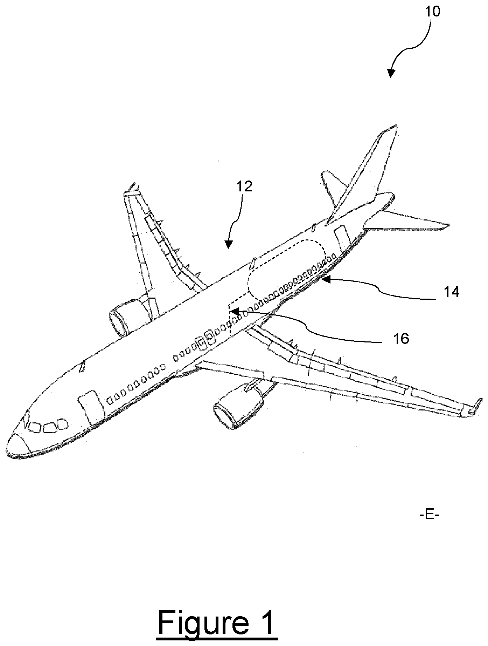

Referring to figure 1, an aircraft 10 comprises an arrangement for transporting a cryogenic fluid 12. For example, the aircraft further comprises a cryogenic tank 14, fluidically connected with the arrangement for transporting a cryogenic fluid 12.

The aircraft 10 is for example an airplane. For example, the aircraft 10 is an airliner.

The cryogenic tank 14 is configured to store a cryogenic fluid. The cryogenic tank 14 is for example configured to store liquid hydrogen. In a preferred example the cryogenic tank is configured to store liquid hydrogen that is to be used as an energy source for propulsion of the aircraft 10.

The cryogenic tank 14 is for example a double walled tank and is preferably a cryogenic storage dewar.

The arrangement for transporting cryogenic fluid 12 forms for example a venting arrangement for the cryogenic tank 14. In particular, the arrangement for transporting cryogenic fluid 12 is for example configured to transport excess gaseous hydrogen from the cryogenic tank 14 to an exterior E of the aircraft 10. The arrangement 12 is in particular for example configured for transporting gaseous hydrogen resulting from boiling of the liquid hydrogen stored within the cryogenic tank 14.

The arrangement for transporting cryogenic fluid 12 is for example configured for transporting/venting gaseous hydrogen at a temperature comprised between 20K and 120K, for example 20K and 50K.

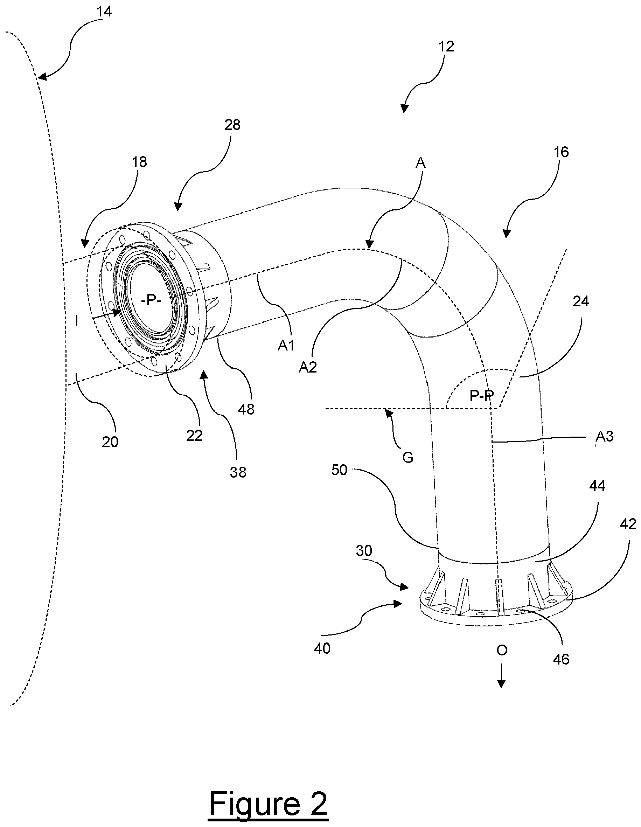

As presented in figure 2, the arrangement for transporting cryogenic fluid 12 comprises a curved pipe segment 16 and at least one adjacent pipe segment 18.

In a non-illustrated example, the arrangement for transporting cryogenic fluid 12 comprises a plurality of curved pipe segments 16 and a plurality of adjacent pipe segments 18. The plurality of curved pipe segments 16 and the plurality of adjacent pipe segments 18 are then for example fluidically connected and are configured for transporting the cryogenic fluid 12 together.

The adjacent pipe 18 is for example a double wall pipe and comprises an elongated body 20 and a flange 22, connected to the elongated body 20.

The adjacent pipe segment 18 is adjacent to the curved pipe segment 16 and is fluidically connected to the curved pipe segment 16. The adjacent pipe segment 18 is for example fastened to the curved pipe segment 16 and is preferably removably fastened to the curved pipe segment 16.

As this will be presented in more details later, the flange 22 of the adjacent pipe 18 is for example configured to be removably fastened to the curved pipe segment 16.

The adjacent pipe segment 18 is for example a straight pipe segment. In another example, the adjacent pipe segment is a curved pipe segment and is for example a curved pipe segment 16 as presented in this description.

The curved pipe segment 16 is configured for transporting a cryogenic fluid.

In particular, the curved pipe segment 16 defines an inlet I, an outlet O, and forms a passage P from the inlet I to the outlet O. The curved pipe segment 16 is then configured for transporting, or in other words guiding, the cryogenic fluid from the inlet I to the oulet O through the passage P.

The curved pipe segment 16 is for example fluidically connected with the cryogenic tank 14. In an example, the curved pipe segment 16 is directly connected and fastened to the cryogenic tank 14. In another example, the at least one adjacent pipe segment 18 connects the curved pipe segment 16 to the cryogenic tank 14.

The curved pipe segment 16 comprises an outer curved tube 24, an inner curved tube 26, a first end portion 28, a second end portion 30, a first connection element 32 a second connection element 34 and an intermediate guiding element 36.

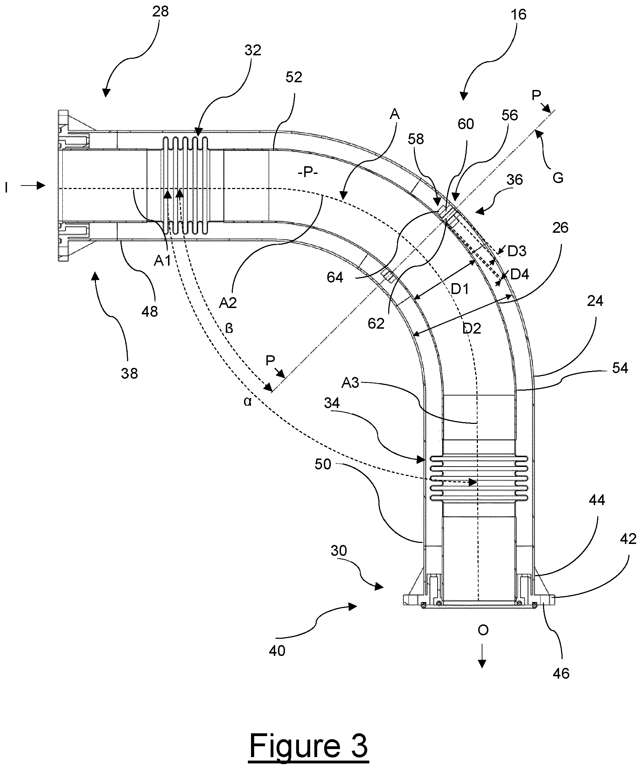

As visible from figures 2 and 3, the curved pipe segment 16 is elongated along a curved axial direction A. The curved axial direction A for example corresponds to a curved central axis, along which the curved pipe segment 16 extends.

As seen in figure 2 and 3, the curved axial direction A joins for example the inlet I and the outlet O and substantially corresponds to a flow direction of the cryogenic fluid in the curved pipe segment 16.

As visible from figure 3, the curved axial direction A for example comprises a first straight portion A1, a single curved portion A2 and a second straight portion A3. In this example, the single curved portion A2 is arranged between the first A1 and second A3 straight portions.

The curved pipe segment 16 is for example curved such that an angle α (illustrated on figure 3) between a first end 38 and a second end 40 of the curved pipe segment 16 is comprised between 10° and 170°, for example between 20° and 160°, for example between 30° and 150°. In the example of figures 2 and 3, the angle α between the first end 38 and the second end 40 of the curved pipe segment 16 is equal to 90°.

The first 28 and second 30 end portions for example corresponds to the first 38 and second 40 ends of the pipe segment 16.

As visible from figures 2 and 3, each the first 28 and second 30 end portions for example comprises a flange 42 and, for example, further comprises a tubular portion 44, connected to the flange (the flange 42 and the tubular portion 44 being reference only for the second end portion 30 for readability purposes).

The flange 42 and the tubular portions 44 are for example integral.

As visible from figure 2, the flange 42 is for example configured for connecting the curved pipe segment 16 with the adjacent pipe segment 18.

In the above mentioned example in which the adjacent pipe segment 18 is removably fastened to the curved pipe segment 16, the flange 42 for example comprises a plurality of holes 46. Each of the holes are for example configured for receiving a fastening member such as a bolt (not represented) for fastening the flange 42 of the curved pipe segment 16 to the flange 22 of the adjacent pipe 18.

As this will be presented in more details later, the tubular portion 44 is connected to the outer curved tube 24. For example, the tubular portion 44 is fitted around, or in, the outer curved tube 24. Additionally, or in alternative, the tubular portion 44 is welded to the outer curved tube 24. In another example, the tubular portion 44 and the outer curved tube 24 are integral. In such an example, the tubular portion is for example either integral with the flange 42 of welded to the flange 42.

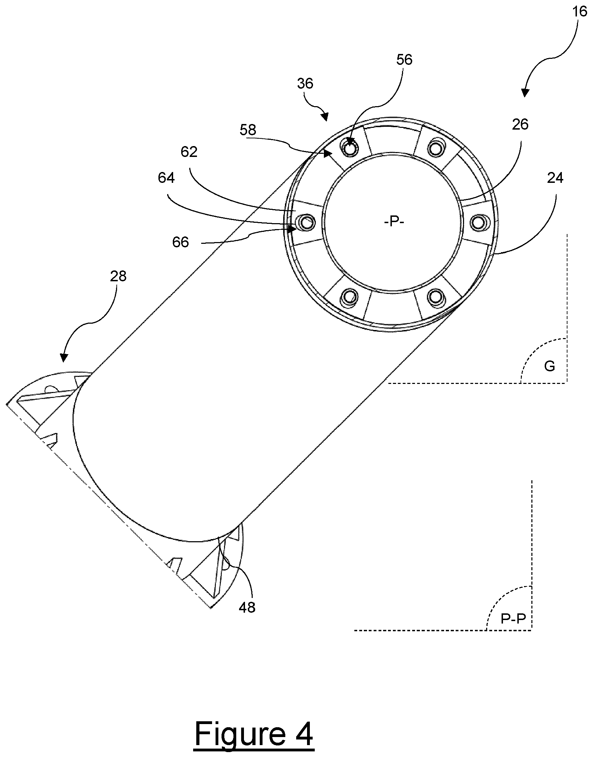

For example, the tubular portion 44 is a double walled tubular portion. As visible from figure 3 and 4, one of the walls (non-referenced) of such a double walled tubular portion is connected to the inner curved tube 26 and the other of the walls (non-referenced) is connected to the outer curved tube 24.

The outer curved tube 24 is elongated along the curved axial direction A and defines an outside of the outer curved pipe segment 16.

As visible from figure 3, the outer curved tube 24 comprises a first outer end 48 and a second outer end 50, opposite the first outer end 48.

As visible from the figure 3, the first outer end 48 is connected to the first end portion 28 and the second outer end 50 is connected to the second outer end portion 30.

For example, the first outer end 48 is fastened, for example welded, to the tubular portion 44 of the first end portion 28 and/or the second outer end 50 is for example fastened, for example welded, to the tubular portion 44 of the second end portion 30.

In complement, or in alternative, the tubular portion 44 of the first end portion 28 is fitted around, or in, the first outer end 48 and/or the tubular portion 44 of the second end portion 30 is fitted around, or in, the second outer end 50

In complement, or in alternative, the first outer end 48 is for example fastened, for example welded, to the flange 42 of the first end portion 28 and/or the second outer end 50 is for example fastened, for example welded, to the flange 42 of the second end portion 30.

The inner curved tube 26 is elongated along the curved axial direction A and defines an inside of the outer curved pipe segment 16. As visible from figure 3, the inner curved tube for example defines the passage P of the curved pipe segment 16 in which the cryogenic fluid is guided.

The inner curved tube 26 is arranged within the outer curved tube 24. The inner curved tube 26 and the outer curved tube 24 are for example coaxial, both being elongated along the same curved axial direction A.

An inner diameter D1 of the inner curved tube 26 is for example comprised between 25mm and 100mm. It is understood that the internal diameter D1 of the inner curved tube varies depending on the temperature of the fluid contained in the passage P.

An inner diameter D2 of the outer curved tube 24 is larger than the inner diameter of the inner diameter D1 of the inner curved. It is understood that the internal diameter D2 of the outer curved tube also varies depending on the temperature of the fluid contained in the passage P.

As visible from figure 3, the inner curved tube 26 comprises a first inner end 52 and a second inner end 54, opposite the first inner end 52.

As visible from the figure 3, the first inner end 52 is connected to the first connection element 32 and the second inner end 54 is connected to the second connection element 34.

For example, the first inner end 52 is fitted around, or in, the first connection element 32 and/or the second inner end 54 is fitted around, or in, the second connection element 34. Additionally, or in alternative, the first inner end 52 is fastened, for example welded to the first connection element 32 and/or the second inner end 54 is for example fastened, for example welded to the second connection element 34.

In another example, the first inner end 52 is integral with the first connection element 32 and/or the second inner end 54 is integral with the second connection element 34.

The first connection element 32 is further connected to the first end portion 28 and the second connection element 34 is further connected to the second end portion 30.

For example, the first connection element 32 is fitted around, or in, the first the first end portion 28 and/or the second connection element 34 is fitted around, or in, the second end portion 28. Additionally, or in alternative, the first connection element 32 is fastened, for example welded, to the first end portion 28 and/or the second connection element 34 is for example fastened, for example welded to the second end portion 30.

In another example, the first connection element 32 is integral with the first end portion 28 and/or the second connection element 34 is integral with the second end portion 30.

The first connection element 32 connects the inner curved tube 26 to the first end portion 28 and the second connection element 34 connects the inner curved tube 26 to the second end portion 28.

The first connection element 32 is further configured for guiding the inner curved tube 26 along the axial direction A and the second connection element is further configure for guiding the inner curved tube 26 along the axial direction A. The term guiding along the axial direction A should be here understood in that it allows displacement along said axial direction A. In other words, the first connection element 32 allows displacement of the inner curved tube 26 along the axial direction A and the second connection element allows displacement of the inner curved tube 26 along the axial direction A.

The first connection element 32 ensures in particular that the inner curved tube 26 and the first end portion 28 remain tightly fluidically connected independently of the thermal expansion of the inner 26 and outer 24 curved tubes. Similarly, the second connection element 34 ensures that the inner curved tube 26 and the second end portion 30 remain tightly fluidically connected independently of the thermal expansion of the inner 26 and outer 24 curved tubes.

In particular, the first connection element 32 is guiding the first inner end 52 along the curved axial direction A and the second connection element 34 is guiding the second inner end 54 along the curved axial direction A. Since the curved axial direction A has a curved shape, both first 52 and second 54 inner ends are guided along the axial direction A but may be guided along a different absolute direction. In particular, in the example of figure 3, the first connection element 32 guides the first inner end 52 along the first straight portion A1 of the curved axial direction A and the second connection element 34 guides the second inner end 54 along the second straight portion A3 of the curved axial direction. In such an example, although both inner ends 52, 54 are guided along the curved axial direction A, the inner ends 52, 54 are guided along non-parallel directions, and in the example of figure 3, along perpendicular directions.

The first connection element 32 is for example guiding the first inner end 52 and the second connection element 34 is guiding the second inner end 54 such that the radial movement of the first inner end 52 and of the second inner end 54 is negligible relative to the axial movement of the first inner end 52 and of the second inner end 54. In another example, the first connection element 32 and/or the second connection element 34 also allows radial movement of the first inner end 52 and of the second inner end 54.

For example, the first 32 and/or second 34 connection element comprises, or is, a bellow. In particular, in the example of figure 3, both the first 32 and second 34 connection elements are bellows.

As visible from figure 3, the intermediate guiding element 36 is axially arranged between the first connection element 32 and the second connection element 34. In other words, the intermediate guiding element 36 is arranged between the first connection element 32 and the second connection element 34 along the curved axial direction A.

The intermediate guiding element 36 is further for example radially arranged between the inner curved tube 26 and the outer curved tube 24.

The intermediate guiding element 36 is configured for blocking axial movement of the inner curved tube 26 relative to the outer curved tube 24. In particular, it is understood that the guiding element 36 is configured for locally blocking axial movement of the inner curved tube 26 relative to the outer curved tube 24, axially between the first connection element 32 and the second connection element 34. Therefore, the first inner end 52 and the second inner end 54 remain moveable along the axial direction A relatively to the outer curved tube 24.

In the example presented in figure 3, the guiding element 36 is configured for blocking axial movement of the inner curved tube 26 relative to the outer curved tube 24 locally around the curved portion A2 of the axial direction A.

The intermediate guiding element 36 is for example configured for radially guiding the inner curved tube relative 26 to the outer curved tube 24. The intermediate guiding element 36 is for example configured for radially guiding the inner curved tube relative 26 to the outer curved tube 24 when the distance D1 between the outer curved tube 24 and the outer curved tube 26 varies, for example resulting from a change of diameter of the inner curved tube 26 and/or of the outer curved tube 24.

For example, the intermediate guiding element 36 is guiding the inner curved tube relative 26 to the outer curved tube 24 along a radial guiding plane G, the radial guiding plane G being perpendicular to the curved axial direction A.

For example, an angle β between the first end 38 of the curved pipe segment 16 and the radial guiding plane G corresponds to the half of the angle α between the first end 38 and the second end 40 of the curved pipe segment.

In an example, as for example illustrated in figure 3, the intermediate guiding element 36 comprises an inner portion 56 and an outer portion 58. In such an example, the intermediate guiding element 36 further for example comprises at least one insulation element 60, arranged between the inner portion 56 and the outer portion 58.

The intermediate guiding element 36 comprises for example at least three inner portion 56 and at least three outer portions 58. In the example of figure 4, the intermediate guiding element 36 comprises six inner portions 56 and six outer portions 58.

The inner portion 56 is fastened to the inner curved tube 26 and the outer portion 58 is fastened to the outer curved tube 24.

The inner portion 56 and the outer portion 58 are configured to cooperate for blocking axial movement of the inner curved tube 26 relative to the outer curved tube 24.

In particular, in the example of figure 3, each inner portion 56 is configured to cooperate with one of the outer portions 58 for blocking axial movement of the inner curved tube 26 relative to the outer curved tube 24. As presented above, each inner portion 56 is further for example configured to cooperate with one of the outer portions 58 for radially guiding the inner curved tube 26 relative to the outer curved tube 24, or in other words, allowing radial thermal expansion of the inner curved tube 26 and of the outer curved tube 24.

As presented in figure 3, and for example, a radial distance D3 between the inner portion 56 and the outer curved tube 24 and/or a radial distance D4 between the outer portion 58 and the inner curved tube 26 is superior to 0.1 mm.

As illustrated in figure 3, one of the inner 56 and outer 58 portion comprises two external lugs 64 and the other of the inner 56 and outer 58 portion comprises one internal lug 62.

In particular, in the example of figure 3 and 4, each of the inner portions 56 comprises two external lugs 64 and each of the outer portions 58 comprises one internal lug 62.

The internal lug 62 is axially arranged between the two external lugs 64. In particular the internal lug 62 and the outer lug 64 are axially cooperating for blocking axial movement of the inner curved tube 26 relative to the outer curved tube 24.

As visible from figure 3, when the intermediate guiding element 36 comprises at least one insulation element 60, each insulation element 60 is for example axially arranged between each of the internal lugs 62 and the outer lug 64. Each insulation element 60 is then configured for preventing heat transfer between on one of the internal lugs 62 and one of the external lugs 64. The insulation element 60 are for example forming insulation pad sandwiched between one of the outer lugs 64 and the internal lug 62.

The insulation element 60 is for example made of a plastic material having a low thermal conductivity.

The thermal conductivity of the insulation element 60 is for example inferior to 0.3 W·m⁻¹·K⁻¹ at 25 °C and is for example comprised between 0.15 W·m⁻¹·K⁻¹ and 0.25 W·m⁻¹·K⁻¹ at 25 °C.

Furthermore, and for example, one of the inner 56 and outer 58 portion comprises a radially extending slot 66, the other of the inner 56 and outer portion 58 comprising a pin (not represented), such as for example a bolt, cooperating with the radially extending slot 66.

In particular each outer portion 58 for example comprises a pin connecting the external lugs 64 of the outer portion 58, and the inner portion 56 comprises a radially extending slot 66. The pin is for example configured for being guided in the radially extending slot 66, for example upon radial expansion of the inner curved tube 26 relative to the outer curved tube 24.

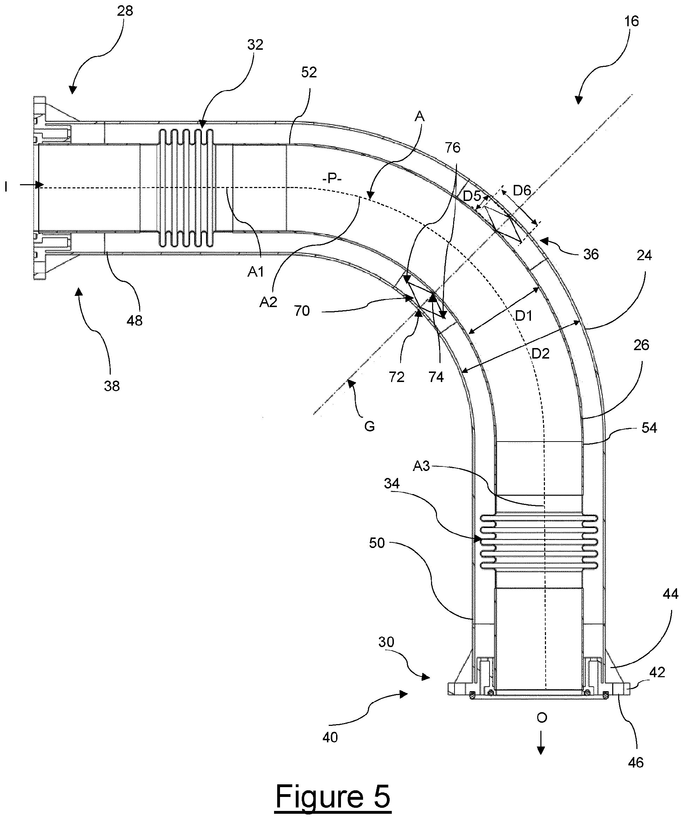

Figures 5 shows another second embodiment of curved pipe segment 16. This embodiment differs from the previously presented first embodiment only as follows. Analogous elements have the same references.

In this embodiment, the intermediate guiding element 36 comprises a spring 70. The spring is configured for blocking axial movement of the inner curved tube 26 relative to the outer curved tube 24 and is for example further configure for radially guiding the inner curved tube 26 relative to the outer curved tube 24.

For example, the intermediate guiding element 36 comprises a plurality of springs 70 arranged at regular orthoradial distance between the inner curved tube 26 and the outer curved tube 24.

For example, the intermediate guiding element 36 consists of the spring 70 or of the plurality of springs 70.

The spring 70 is fastened to the inner curved tube 26 and to the outer curved tube 24.

The spring 70 has for example a rhombus-shaped orthoradial profile. In other words, and for example, a profile of the spring 70 taken along a plane comprising a portion of the curved axial direction A is of rhombus-shape. In other non-illustrated embodiments, the spring 70 has another orthoradial profile, such as for example a V shaped orthoradial profile.

The spring is for example fastened to the outer curved tube 24 along an outer vertex 72 of the rhombus-shaped orthoradial profile and is fastened to the inner curved tube 26 along an inner vertex 74 of the rhombus-shaped orthoradial profile.

A distance D5 between the inner vertex 74 and the outer vertex 72 for example corresponds to the distance between the outer curved tube 24 and the outer curved tube 26.

A distance D6 between the two other vertexes 76 of the rhombus-shaped orthoradial profile is for example at least 1.5 times longer than the distance D5 between the inner vertex 74 and the inner vertex 72.

An assembly method of an arrangement 12 comprising a curved pipe segment 16 of any of the above described examples will now be presented.

In a first step, at least one curved pipe segment 16 as above presented and at least one adjacent pipe segment 18 as above presented are provided.

In a second step, the at least one curved pipe segment 16 is connected to the at least one adjacent pipe segment 18.

In particular, the at least one adjacent pipe segment 18 is connected to the at least one curved pipe segment 16 by the first end portion 28 or the second end portion of the at least one curved pipe segment 16.

During this second step, the at least one adjacent pipe segment 18 is for example removably fastened to the at least one curved pipe segment 16. For example, the flanges 22, 42 of the curved pipe segment 16 and of the adjacent pipe segment 18 are removably connected to each other.

As presented above, the use of a curved pipe segment 16 comprising a first connection element 32, second connection element 34 and intermediate guiding element 36 provides improved and reliable leak tightness performances, while allowing the curved pipe segment 16 to be light, compact and easy to assemble.

The position of the intermediate guiding element 36 further contributes to provide the above mentioned benefits for the curved pipe segment 16.

Having first 32 and/or second 34 connection elements formed as bellows is particularly advantageous to provide connection elements providing a reliable axial guiding while being compact and easy to manufacture.

The above presented curvature of the curved pipe segment 16 is particularly advantageous to form a great variety of arrangements for transporting a cryogenic fluid 12 and is particularly advantageous in the context of venting arrangements.

The presented intermediate guiding element 36 comprising an inner portion 56 and an outer portion 58 is particularly advantageous for providing an accurate guiding of the inner curved tube 26 relative to the outer curved tube 24, thus providing improved insulation performances of the curved pipe segment 16.

The presented intermediate guiding element 36 comprising a spring is also advantageous for providing improved insulation performances of the curved pipe segment 16 and is furthermore especially convenient to manufacture.

## Claims

1. Curved pipe segment (16) for transporting a cryogenic fluid, the curved pipe segment (16) being elongated along a curved axial direction (A) and comprising:
- an outer curved tube (24), comprising:
+ a first outer end (48), and
+ a second outer end (50), opposite the first outer end (48);
- an inner curved tube (26), arranged within the outer curved tube (24) and comprising:
+ a first inner end (52), and
+ a second inner end (54), opposite the first inner end (52);
- a first end portion (28), connected to the first outer end (48); and
- a second end portion (30), connected to the second outer end (50);
wherein the curved pipe (16) segment further comprises:
- a first connection element (32), connecting the inner curved tube (26) to the first end portion (28) and guiding the first inner end (52) along the axial direction (A);
- a second connection element (34), connecting the inner curved tube (26) to the second end portion (30) and guiding the second inner end (54) along the axial direction (A); and
- an intermediate guiding element (36), axially arranged between the first (32) and second (34) connection elements and blocking axial movement of the inner curved tube (26) relative to the outer curved tube (24).

2. Curved pipe segment (16) according to claim 1, wherein the intermediate guiding element (36) radially guides the inner curved tube (26) relative to the outer curved tube (24).

3. Curved pipe segment (16) according to claim 1 or 2, wherein the intermediate guiding element (36) is radially arranged between the inner curved tube (26) and the outer curved tube (24).

4. Curved pipe segment (16) according to any of the preceding claims, wherein the first (32) and/or second (34) connection element comprises a bellow.

5. Curved pipe segment (16) according to any of the preceding claims, wherein the curved pipe segment (16) is curved such that an angle (α) between a first end (38) and a second end (40) of the curved pipe segment (16) is comprised between 10° and 170°.

6. Curved pipe segment (16) according to any of the preceding claims, wherein the first (28) and/or second (30) end portion comprises a flange (16), the flange (42) being configured for connecting the curved pipe segment (16) with an adjacent pipe segment (18).

7. Curved pipe segment (16) according to any of the preceding claims, wherein the intermediate guiding element (36) comprises one inner portion (56), fastened to the inner curved tube (26) and one outer portion (58), fastened to the outer curved tube (24), the inner portion (56) and the outer portion (58) being configured to cooperate for blocking axial movement of the inner curved tube (26) relative to the outer curved tube (24).

8. Curved pipe segment (16) according to claim 7, wherein a radial distance (D3) between the inner portion (56) and the outer curved tube (24) and/or a radial distance (D4) between the outer portion (58) and the inner curved tube (26) is superior to 0.1 mm.

9. Curved pipe segment (16) according to claim 7 or 8, wherein one of the inner (56) and outer (58) portion comprises two external lugs (64) and the other of the inner (56) and outer (58) portion comprises one internal lug (62), the internal lug (62) being axially arranged between the two external lugs (64).

10. Curved pipe segment (16) according to any of the claims 7 to 9, wherein one of the inner (56) and outer (58) portion comprises a radially extending slot (66), the other of the inner (56) and outer (58) portion comprising a pin cooperating with the radially extending slot (66).

11. Curved pipe segment (16) according to any of the claims 7 to 10, wherein the intermediate guiding element (36) comprises at least three inner portions (56) and at least three outer portions (58), each inner portion (56) being configured to cooperate with one of the outer portions (58) for blocking axial movement of the inner curved tube (26) relative to the outer curved tube (24).

12. Curved pipe segment (16) according to any of the claims 1 to 6, wherein the intermediate guiding element (36) comprises a spring (70), the spring (70) being fastened to the inner curved tube (26) and to the outer curved tube (24).

13. Curved pipe segment (16) according to claim 12, wherein the spring (70) has a rhombus-shaped orthoradial profile, the spring (70) being fastened to the outer curved tube (24) along an outer vertex (72) of the rhombus-shaped orthoradial profile and being fastened to the inner curved tube (26) along an inner vertex (74) of the rhombus-shaped orthoradial profile.

14. Arrangement for transporting a cryogenic fluid (12), comprising a curved pipe segment (16) according to any of the claims 1 to 13 and at least one adjacent pipe segment (18), the at least one adjacent pipe segment (18) being removably fastened to the curved pipe segment (16).

15. Aircraft (10) comprising a cryogenic tank (14), the aircraft (10) further comprising:
- a curved pipe segment (16) according to any of the claims 1 to 13, fluidically connected with the cryogenic tank (14), and/or
- an arrangement for transporting a cryogenic fluid (12) according to claim 14, fluidically connected with the cryogenic tank (14).
